# EUROPÄISCHE PATENTANMELDUNG

(11) **EP 1 033 195 A1**
(43) Veröffentlichungstag der Anmeldung: **06.09.2000**
(21) Anmeldenummer: 00102945.3
(22) Anmeldetag: 14.02.2000
(51) Int. Cl.: B23B 31/16

(54) **Spannbacke**

(30) Priorität: 26.02.1999 DE 29903520 U
(71) Anmelder: FORKARDT GmbH, 40699 Erkrath (DE)
(72) Erfinder: Antoni, Herbert, 41472 Neuss (DE); Klein, Helmut, 42781 Haan (DE)
(74) Vertreter: Stenger, Watzke & Ring Patentanwälte

(57) **Zusammenfassung**

Um eine für Spanneinrichtungen von Werkzeugmaschinen bestimmte Spannbacke mit mindestens einer einem vorgegebenen Spanndurchmesserbereich zugeordneten, mindestens einen Zahn aufweisenden Spannfläche derart weiterzubilden, daß sie trotz einer universellen Einsatzmöglichkeit preisgünstig hergestellt werden kann und eine sichere Einspannung innerhalb des vorgegebenen Spannbereiches garantiert, wird vorgeschlagen, daß der Zahn an der Mantelfläche eines zylindrischen Einsatzes (20) ausgebildet ist, der unverlierbar in einer entsprechend zylindrischen, auf der Mittelachse und/oder symmetrisch zu beiden Seiten der Mittelachse ausgebildeten und zur Spannfläche offenen Ausnehmung (15) angeordnet ist, die von der Stirnfläche (16) der Spannbacke ausgehend etwa rechtwinklig zur Stirnfläche derart in der Spannbacke ausgebildet ist, daß der Einsatz (20) zumindest mit seinem Zahn (21) aus der Spannfläche herausragt und auf einem Umschlingungswinkel von mehr als 180° von der Wand der Ausnehmung (15) umfaßt ist.

## Beschreibung

Die Erfindung betrifft eine Spannbacke für Spanneinrichtungen von Werkzeugmaschinen, insbesondere für eine spanabhebende Bearbeitung von Werkstücken, mit mindestens einer einem vorgegebenen Spanndurchmesserbereich zugeordneten, mindestens einen Zahn aufweisenden Spannfläche.

Außer Spannbacken, die unter Spanndruck auf den jeweiligen Spanndurchmesser ausgedreht werden und zum Spannen des Werkstückes auf einer bereits bearbeiteten Fläche eingesetzt werden, sind Spannbacken mit einer oder mehreren Spannstufen bekannt, bei denen zur sicheren Einspannung der Werkstücke an unbearbeiteten Flächen zahnartige Vorsprünge ausgebildet sind. Neben Stufenbacken mit einer Mehrzahl von Zähnen an jeder Spannfläche gibt es Krallenbacken mit einem oder mehreren Zähnen an der einzigen Spannfläche, wobei diese Zähne auch an auswechselbaren Spanneinsätzen angeordnet sein können.

Sowohl die Herstellung von auf spezielle Einsatzfälle abgestellten Krallenbacken als auch von universell einsetzbaren Stufenbacken ist aufwendig und teuer.

Es sind Spannbacken-Systeme für Spanneinrichtungen bekannt, bei welchen die Zähne durch in Ausnehmungen eingesetzte Einsätze gebildet werden, wobei die Einsätze durch Schrauben befestigt werden. Insbesondere bei den auftretenden hohen Geschwindigkeiten sind derartige Systeme nicht ausreichend sicher. Darüber hinaus sind die Systeme nur bei einstufigen Spannbacken bekannt.

Der Erfindung liegt die **Aufgabe** zugrunde, eine für Spanneinrichtungen von Werkzeugmaschinen bestimmte Spannbacke der eingangs beschriebenen Art mit mindestens einer einem vorgegebenen Spanndurchmesserbereich zugeordneten, mindestens einen Zahn aufweisenden Spannfläche derart weiterzubilden, daß sie trotz einer universellen Einsatzmöglichkeit preisgünstig hergestellt werden kann und eine sichere Einspannung innerhalb des vorgegebenen Spannbereiches garantiert.

Die **Lösung** dieser Aufgabenstellung durch die Erfindung ist dadurch gekennzeichnet, daß der Zahn an der Mantelfläche eines zylindrischen Einsatzes ausgebildet ist, der unverlierbar in einer entsprechend zylindrischen, auf der Mittelachse und/oder symmetrisch zu beiden Seiten der Mittelachse ausgebildeten und zur Spannfläche offenen Ausnehmung angeordnet ist, die von der Stirnfläche der Spannbacke ausgehend etwa rechtwinklig zur Stirnfläche derart in der Spannbacke ausgebildet ist, daß der Einsatz zumindest mit seinem Zahn aus der Spannfläche herausragt und auf einem Umschlingungswinkel von mehr als 180° von der Wand der Ausnehmung umfaßt ist.

Durch die erfindungsgemäße Ausbildung des Zahnes an der Mantelfläche eines zylindrischen Einsatzes und die erfindungsgemäße Anordnung dieses Einsatzes in einer auf der Mittelachse und/oder symmetrisch zu beiden Seiten der Mittelachse ausgebildeten Ausnehmung kann die eigentliche Spannbacke preisgünstig hergestellt werden. Insbesondere ist ein Härten der Spannbacke nicht erforderlich, da die Übertragung der Spannkraft ausschließlich im Bereich des oder der Einsätze erfolgt, die ihrerseits preisgünstig hergestellt und gehärtet werden können, weil es sich um einfache Teile handelt, die mit wenig Aufwand herstellbar sind. Die Form und Anzahl der Spannflächen kann hierbei ebenso dem jeweiligen Einsatzzweck angepaßt werden wie die Lage und Anzahl der mit jeweils mindestens einem Zahn versehenen Einsätze. Es ist somit möglich, sowohl für spezielle Spanneinsätze bestimmte als auch universell einsetzbare Spannbacken gemäß der Erfindung preisgünstig herzustellen.

Der Querschnitt der zylindrischen Einsätze sowie der entsprechenden Ausnehmungen in der Spannbacke kann jede beliebige Form haben, beispielsweise in der Art eines Polygons. Um die Herstellung sowohl der Einsätze als auch der Ausnehmungen zu vereinfachen, wird gemäß einem weiteren Merkmal der Erfindung vorgeschlagen, den Einsatz und die zugehörige Ausnehmung mit einer kreiszylindrischen Grundform auszubilden. Hierdurch können insbesondere die Ausnehmungen durch Bohren oder Fräsen preisgünstig hergestellt werden.

Um die Kraftübertragung zwischen der Spannbacke und dem Werkstück zu verbessern, kann gemäß einem weiteren Merkmal der Erfindung der Einsatz mit mehreren, mindestens in einer Reihe angeordneten Zähnen versehen sein. Derartige Zähne können somit sowohl in einer Reihe hintereinanderliegend als auch in mehreren, vorzugsweise parallelen Reihen auf der Mantelfläche des Einsatzes ausgebildet werden.

Sofern die erfindungsgemäße Spannbacke in der Art einer auf einer Grundbacke um 180° verdrehbaren und in radialer Richtung versetzbaren Stufenbacke mit mehreren, auf unterschiedlichen Spanndurchmessern liegenden Spannflächen ausgebildet ist, wird mit der Erfindung vorgeschlagen, im Bereich jeder Spannfläche eine auf der Mittelachse und/oder symmetrisch zu beiden Seiten der Mittelachse liegende Ausnehmung auszubilden. Die in diesen Ausnehmungen angeordneten Einsätze übertragen somit die Spannkraft entweder im Bereich der Mittelachse der Spannbacke und/oder symmetrisch im Abstand zu beiden Seiten dieser Mittelachse von der Spannbacke auf das Werkstück.

Um auch bei Spannflächen mit in axialer Richtung unterschiedlicher Tiefe eine preisgünstige Herstellung zu ermöglichen, wird die Tiefe der Ausnehmungen mit dem Ein- oder Mehrfachen der Länge des für sämtliche Ausnehmungen identischen Einsatzes ausgebildet. Auf diese Weise ist es möglich, trotz unterschiedlicher Abmessungen der Spannflächen in axialer Richtung, das heißt parallel zur Drehachse dieselben Einsätze verwenden zu können, die demgemäß in größerer Stückzahl und damit preisgünstiger hergestellt werden können und in einer der jeweiligen Tiefe der Ausnehmung entsprechenden Zahl in die Ausnehmung eingesetzt werden.

Erfindungsgemäß ist jeder Einsatz durch eine lösbare Verbindung auswechselbar in der jeweiligen Ausnehmung angeordnet, insbesondere durch Klemmen, Kleben oder Löten.

Um auch unter Spannkraft eine exakte Lage der Einsätze zum jeweils einzuspannenden Werkstück sicherzustellen, wird mit der Erfindung schließlich vorgeschlagen, die Ausnehmungen als Bohrungen bei auf der Spanneinrichtung angeordneten und unter Spannkraft stehenden Spannbacken in diese einzubringen. Selbst geringförmige Verformungen der Spannbacken und der die Spannbacken antreibenden Getriebeteile des Spannfutters werden auf diese Weise ausgeglichen.

In vorteilhafter Weise wird mit der Erfindung vorgeschlagen, daß die Einsätze mittels Hartlöten in den Ausnehmungen befestigt sind. Eine derartige Befestigung hat den Vorteil, daß selbst bei mehrstufigen Spannbacken und somit unbelasteten Einsätzen bei den auftretenden hohen Geschwindigkeiten ein Ablösen der Einsätze ausgeschlossen ist. Darüber hinaus sind die Kraftübertragungen erheblich verbessert. Dies wird noch begünstigt dadurch, daß gemäß einem vorteilhaften Vorschlag der Erfindung sich die Einsätze vollflächig in den Ausnehmungen abstützen und somit Kippmomente oder ein Eindrücken mit der Zeit vermieden werden. Die Kräfte werden über große Flächen gleichmäßig verteilt. Insbesondere wird mit der Erfindung vorgeschlagen, daß die Einsätze unverdrehbar in den Ausnehmungen eingesetzt sind, so daß beim Herstellen der Ausnehmungen und Fixieren der Einsätze erfolgte Grundeinstellungen nicht veränderbar sind.

Auf der Zeichnung ist ein Ausführungsbeispiel der erfindungsgemäßen Spannbacke dargestellt, und zwar zeigen:
- Fig. 1: eine Stirnansicht einer als Stufenbacke ausgebildeten Spannbacke,
- Fig. 2: eine Draufsicht auf die Spannbacke nach Fig. 1,
- Fig. 3: einen Längsschnitt durch die Spannbacke gemäß der Schnittlinie III-III in Fig. 1,
- Fig. 4: eine vergrößert dargestellte Stirnansicht eines der verwendeten Einsätze und
- Fig. 5: eine Seitenansicht des Einsatzes nach Fig. 4.

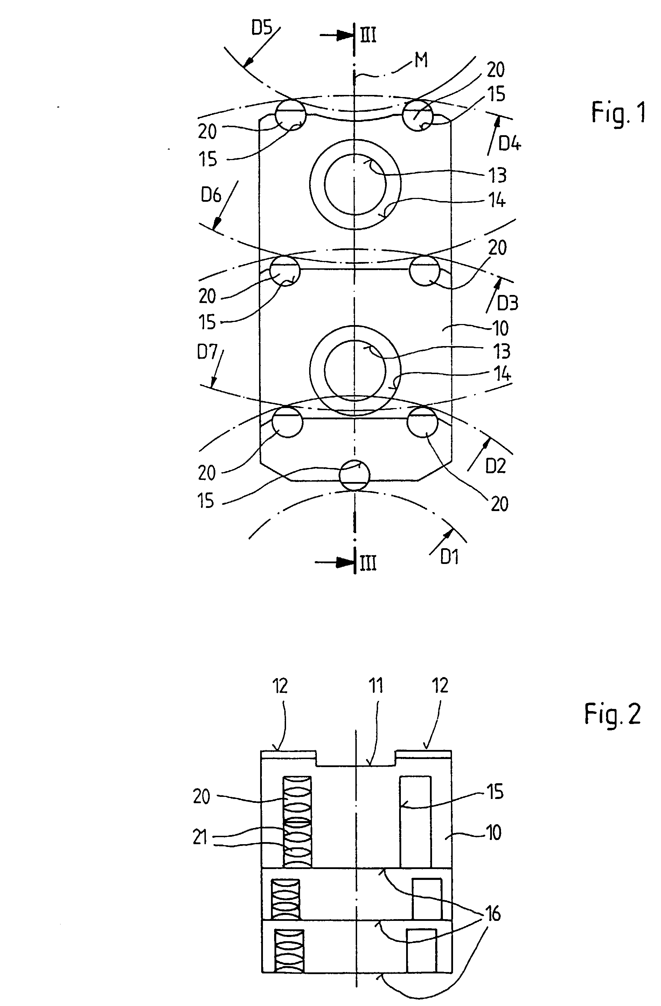

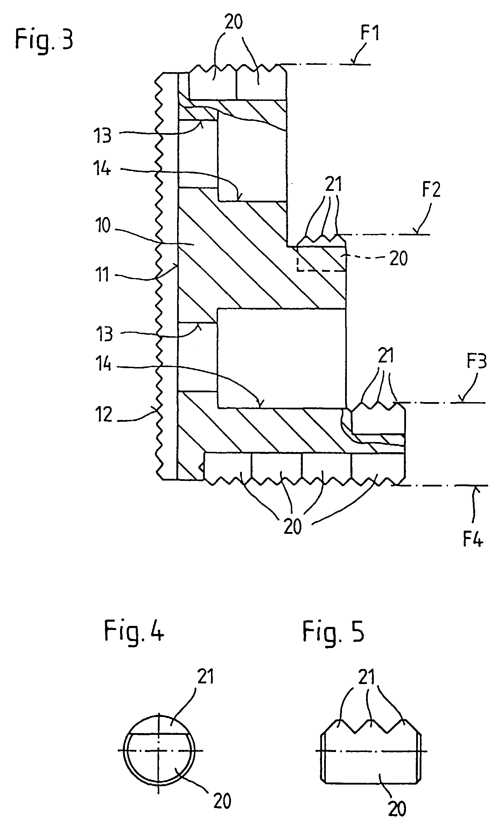

Bei der als Ausführungsbeispiel dargestellten Spannbacke ist der Backenkörper 10 an seiner Rückseite gemäß Fig. 2 mit einer längs verlaufenden Nut 11 versehen; zu beiden Seiten dieser Nut 11 sind auf der Rückseite des Backenkörpers 10 Spitzverzahnungen 12 ausgebildet, mit deren Hilfe die Spannbacke über entsprechende Verzahnungen an einer nicht dargestellten Grundbacke befestigt werden kann. Die Spannbacke kann hierbei in den Spitzverzahnungen 12 entsprechenden Stufen in Längsrichtung an der Grundbacke befestigt und auch um 180° gegenüber der Grundbacke gedreht werden. Die Befestigung der Spannbacke an der Grundbacke erfolgt durch zwei auf der Zeichnung nicht dargestellte Backenbefestigungsschrauben. Für den Durchtritt des Schaftes dieser Backenbefestigungsschrauben ist der Backenkörper 10 mit zwei Durchgangsbohrungen 13 versehen. An diese Durchgangsbohrungen 13 schließt sich jeweils eine im Durchmesser erweiterte Bohrung 14 für den Kopf der Backenbefestigungsschraube an, wie dies am besten im Längsschnitt der Fig. 3 zu erkennen ist.

Die als sogenannte Stufenbacke ausgebildete Spannbacke ist beim dargestellten Ausführungsbeispiel mit insgesamt vier Spannflächen F1 bis F4 versehen, die in Fig. 3 gekennzeichnet sind. Durch Drehen und radiales Versetzen der Spannbacke auf der nicht dargestellten Grundbacke lassen sich beim Ausführungsbeispiel damit insgesamt sieben Spanndurchmesserbereiche D1 bis D7 abdecken, die in Fig. 1 durch den jeweils mittleren Durchmesser des jeweiligen Spannbereiches gekennzeichnet sind.

Zur Übertragung der Spannkraft von der Spannbacke auf das nicht dargestellte Werkstück dienen Einsätze 20, die als zylindrischer Körper mit auf der Mantelfläche in einer Reihe ausgebildeten Zähnen 21 ausgeführt sind. Diese Einsätze 20 haben beim Ausführungsbeispiel einen kreiszylindrischen Querschnitt und drei Zähne 21, deren Ausbildung am besten in Fig. 5 zu erkennen ist. Die Flanken dieser in der Spitze abgeflachten Zähne 21 schließen beim Ausführungsbeispiel einen Winkel von 90° zueinander ein; die Zähne 21 können selbstverständlich auch eine andere Form aufweisen. So genügt in einigen Fällen die Anordnung eines Zahnes 21 auf der Mantelfläche des Einsatzes 20. In anderen Fällen können auch mehr Zähne 21 in mehreren vorzugsweise parallel zueinander verlaufenden Reihen auf der Mantelfläche des Einsatzes 20 ausgebildet sein.

Die Einsätze 20 sind jeweils unverlierbar in einer Ausnehmung 15 des Backenkörpers 10 angeordnet, die jeweils von der Stirnfläche 16 des Backenkörpers 10 ausgehend rechtwinklig zu dieser Stirnfläche 16 verläuft und zur jeweiligen Spannfläche F1 bis F4 offen ist, so daß die Zähne 21 des Einsatzes 20 aus der Ausnehmung 15 im Backenkörper 10 in Richtung der jeweiligen Spannfläche F1 bis F4 herausragen, wie dies insbesondere im mittleren Teil der Fig. 3 und in der linken Hälfte der Fig. 2 zu erkennen ist. Insbesondere die Fig. 1 zeigt, daß hierbei jeder Einsatz 20 auf einem Umschlingungswinkel von mehr als 180° von der Wand der Ausnehmung 15 umfaßt wird, so daß der Einsatz in radialer Richtung nicht aus der jeweiligen Ausnehmung 15 herausfallen kann. In axialer Richtung der Ausnehmung 15 wird jeder Einsatz 20 beispielsweise durch Klemmen, Kleben oder Löten unverlierbar gehalten.

Wie insbesondere die Fig. 1 weiter erkennen läßt, werden die Spannflächen F1 bis F4 beim dargestellten Ausführungsbeispiel entweder durch einen auf der Mittelachse M des Backenkörpers 10 angeordneten Einsatz 20 oder durch zwei Einsätze 20 gebildet, die symmetrisch zu beiden Seiten der Mittelachse M angeordnet sind. Selbstverständlich ist es auch möglich, eine Spannfläche durch drei Einsätze 20 zu bilden, von denen einer auf der Mittelachse M und zwei symmetrisch zu beiden Seiten der Mittelachse M angeordnet sind.

Um dieselben Einsätze 20 zur Bildung unterschiedlich tiefer Spannflächen F1 bis F4 verwenden zu können, ist beim Ausführungsbeispiel die Tiefe der Ausnehmungen 15 mit dem Ein- oder Mehrfachen der Länge des für sämtliche Ausnehmungen 15 identischen Einsatzes 20 ausgebildet. Die Fig. 3 zeigt, daß zur Bildung der Spannflächen F2 und F3 jeweils ein Einsatz 20 in der zugehörigen Ausnehmung 15 angeordnet ist, wogegen die Spannfläche F1 durch zwei und die Spannfläche F4 durch vier hintereinander in den Ausnehmungen 15 angeordnete Einsätze 20 gebildet wird.

Da sich bei einem Spannfutter die Lage der Spannbacke unter Spannkraft verändernde Verformungen nicht vermeiden lassen, können bei dem voranstehend beschriebenen Backenkörper die Ausnehmungen 15 als Bohrungen bei auf der Spanneinrichtung angeordneten und unter Spannkraft stehenden Spannbacken in diese eingebracht werden. Hierdurch wird sichergestellt, daß sich die Zähne 21 der Einsätze 20 bei unter Spannkraft stehenden Spannbacken in der vorgeschriebenen Lage befinden.

### Bezugszeichenliste

- 10: Backenkörper
- 11: Nut
- 12: Spitzverzahnung
- 13: Durchgangsbohrung
- 14: Bohrung
- 15: Ausnehmung
- 16: Stirnfläche
- 20: Einsatz
- 21: Zahn
- D1 bis D7: Spanndurchmesserbereich
- F1 bis F4: Spannfläche
- M: Mittelachse

## Patentansprüche

1. Spannbacke für Spanneinrichtungen von Werkzeugmaschinen, insbesondere für eine spanabhebende Bearbeitung von Werkstücken, mit mindestens einer einem vorgegebenen Spanndurchmesserbereich (D1 bis D7) zugeordneten, mindestens einen Zahn (21) aufweisenden Spannfläche (F1 bis F4),
**dadurch gekennzeichnet,**
daß der Zahn (21) an der Mantelfläche eines zylindrischen Einsatzes (20) ausgebildet ist, der unverlierbar in einer entsprechend zylindrischen, auf der Mittelachse (M) und/oder symmetrisch zu beiden Seiten der Mittelachse (M) ausgebildeten und zur Spannfläche (F1 bis F4) offenen Ausnehmung (15) angeordnet ist, die von der Stirnfläche (16) des Backenkörpers (10) ausgehend etwa rechtwinklig zur Stirnfläche (16) derart im Backenkörper (10) ausgebildet ist, daß der Einsatz (20) zumindest mit seinem Zahn (21) aus der Spannfläche (F1 bis F4) herausragt und auf einem Umschlingungswinkel von mehr als 180° von der Wand der Ausnehmung (15) umfaßt ist.

2. Spannbacke nach Anspruch 1, dadurch gekennzeichnet, daß der Einsatz (20) und die zugehörige Ausnehmung (15) mit einer kreiszylindrischen Grundform ausgebildet sind.

3. Spannbacke nach Anspruch 1 oder 2, dadurch gekennzeichnet, daß der Einsatz (20) mit mehreren, mindestens in einer Reihe angeordneten Zähnen (21) versehen ist.

4. Spannbacke nach mindestens einem der Ansprüche 1 bis 3 mit mehreren, auf unterschiedlichen Spanndurchmessern liegenden Spannflächen (F1 bis F4), dadurch gekennzeichnet, daß im Bereich jeder Spannfläche (F1 bis F4) eine auf der Mittelachse (M) und/oder symmetrisch zu beiden Seiten der Mittelachse (M) liegende Ausnehmung (15) ausgebildet ist.

5. Spannbacke nach Anspruch 4, dadurch gekennzeichnet, daß die Tiefe der Ausnehmungen (15) mit dem Ein- oder Mehrfachen der Länge des für sämtliche Ausnehmungen (15) identischen Einsatzes (20) ausgebildet ist.

6. Spannbacke nach mindestens einem der Ansprüche 1 bis 5, dadurch gekennzeichnet, daß der Einsatz (20) durch eine lösbare Verbindung auswechselbar in der jeweiligen Ausnehmung (15) angeordnet ist.

7. Spannbacke nach mindestens einem der Ansprüche 1 bis 5, dadurch gekennzeichnet, daß der Einsatz (20) durch Hartlöten in der jeweiligen Ausnehmung befestigt ist.

8. Spannbacke nach einem der vorhergehenden Ansprüche, dadurch gekennzeichnet, daß der Einsatz (20) unverdrehbar in der jeweiligen Ausnehmung (15) eingesetzt ist.

9. Spannbacke nach mindestens einem der vorhergehenden Ansprüche, dadurch gekennzeichnet, daß der Einsatz (20) sich entlang der in der Ausnehmung (15) befindlichen zylindrischen Mantelfläche vollflächig an der Spannbacke abstützt.

10. Spannbacke nach mindestens einem der vorhergehenden Ansprüche, dadurch gekennzeichnet, daß die Ausnehmungen (15) als Bohrungen bei auf der Spanneinrichtung angeordneten und unter Spannkraft stehenden Spannbacken in den Backenkörper (10) eingebracht werden.
